# EUROPEAN PATENT APPLICATION

(11) **EP 2 608 532 A2**
(43) Date of publication of application: **26.06.2013**
(21) Application number: 12198422.3
(22) Date of filing: 20.12.2012
(51) Int. Cl.: H04N 5/33

(54) **Thermal imaging camera for infrared rephotography**

(30) Priority: 20.12.2011 US 201113331644
(71) Applicant: FLUKE CORPORATION, Everett Washington 98203 (US)
(72) Inventor: Neeley, John, E., Seattle, WA Washington 98103 (US); McManus, Thomas, J., Plymouth, MN Minnesota 55441 (US); Bergstrom, Peter, A., St. Paul, MN Minnesota 55105 (US); Johnson, Kirk, R., Rogers, MN Minnesota 55374 (US); Black, Ty, Cincinnati, OH Ohio 45237 (US)
(74) Representative: Howe, Steven

(57) **Abstract**

Thermal imaging cameras for use in retaking images and methods of retaking images with thermal imaging cameras that include the creation and use of a pose template that helps guide the camera back to the position where the original image was captured.

## Description

### RELATED APPLICATION

The present application is related to the following commonly assigned utility patent application, which is filed concurrently herewith: THERMAL IMAGING CAMERA FOR INFRARED REPHOTOGRAPHY, Practitioner Docket No. 56581.6.102. Any portion of the methods or portions of the cameras described in this related application for retaking an infrared photograph may be combined with any of the methods or cameras described herein for retaking an infrared photograph. For instance, the method steps or the programming of the processor for returning the camera to the position of the first photograph described in the this related application may be combined with the method steps or the programming of the processor for returning the camera to the position of the first photograph described in the instant application.

### TECHNICAL FIELD

This disclosure relates to thermal imaging cameras and, more particularly, to thermal imaging cameras for use in retaking infrared images.

### BACKGROUND

Thermal imaging cameras are used in a variety of situations. For example, thermal imaging cameras are often used during maintenance inspections to thermally inspect equipment. Example equipment may include rotating machinery, electrical panels, or rows of circuit breakers, among other types of equipment. Thermal inspections can detect equipment hot spots such as overheating machinery or electrical components, helping to ensure timely repair or replacement of the overheating equipment before a more significant problem develops.

Depending on the configuration of the camera, the thermal imaging camera may also generate a visible light image of the same object. The camera may display the infrared image and the visible light image in a coordinated manner, for example, to help an operator interpret the thermal image generated by the thermal imaging camera. Unlike visible light images which generally provide good contrast between different objects, it is often difficult to recognize and distinguish different features in a thermal image as compared to the real-world scene. For this reason, an operator may rely on a visible light image to help interpret and focus the thermal image.

In applications where a thermal imaging camera is configured to generate both a thermal image and a visual light image, the camera may include two separate sets of optics: visible light optics that focus visible light on a visible light sensor for generating the visible light image, and infrared optics that focus infrared radiation on an infrared sensor for generating the infrared optics.

It is sometimes useful to compare infrared images from the past to current infrared images of the same object or objects. In this way, changes can be detected which might not otherwise be apparent by observing only the current image. However, if the positioning of the camera and the conditions under which the images were taken in the past are not the same as those under which the current image is taken, the infrared image of the object may appear to have changed when no change has actually occurred, or it may appear to have changed more or less than it actually has. Therefore, in order for the comparison to be as accurate as possible, the images which are being compared should be taken from the same location and under the same conditions. However, finding the precise camera location and determining that the exact same conditions are applied can be very difficult and time consuming. It would therefore be useful to improve the ease with which thermal images can be repeated for purposes of detecting changes over time.

### SUMMARY

Certain embodiments of the invention include a portable, hand-held thermal imaging camera that has a visible light (VL) lens assembly with an associated VL sensor for detecting VL images of a target scene and an infrared (IR) lens assembly with an associated IR sensor for detecting IR images of a target scene. The camera also includes a display, memory, and a processor. The processor is programmed with instructions for capturing a first VL image concurrently with the capture of a first IR image at a first position and at a first point in time. The processor is also programmed with instructions for processing the first image to create a pose template. Portions of the pose template may be created on a computer separate from the camera. The pose template includes augmented features of the first IR image and/or the first VL image that provide indications of the first position. The processor is also programmed with instructions to combine the pose template with a live image of the scene on the camera display to assist to assist a user in repositioning the camera to the first position in order to capture a second IR image of the target scene at or near the first position.

Certain embodiments of the invention also include methods of retaking an infrared (IR) image of a scene that use one or more thermal imaging cameras along with a pose template created from a first image. The method includes combining the pose template with the live image of the scene and repositioning the thermal imaging camera until features of the live image align with features of the pose template, which indicates that the thermal imaging camera is positioned at or near the position where the first image was captured, and then capturing a second image in order to rephotograph the first image.

Certain embodiments of the invention include a portable, hand-held thermal imaging camera that has a visible light (VL) lens assembly with an associated VL sensor for detecting VL images of a target scene and an infrared (IR) lens assembly with an associated IR sensor for detecting IR images of a target scene. The camera also includes a display, memory, and a processor. The processor is programmed with instructions for capturing a first IR image at a first position and at a first point in time. The processor is also programmed with instructions for subtracting the first IR image from a live IR image of the scene to create a difference image to assist a user in aligning the camera with the first position in order to capture a second IR image of the target scene at or near the first position.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a perspective front view of an example thermal imaging camera.

FIG. 2 is a perspective back view of the example thermal imaging camera of FIG. 1.

FIG. 3 is a functional block diagram illustrating example components of the thermal imaging camera of FIGS. 1 and 2.

FIG. 4 is a conceptual illustration of an example picture-in-picture type concurrent display of a visual image and an infrared image.

FIG. 5 is a flow chart of a process for retaking a thermal image.

### DETAILED DESCRIPTION

The following detailed description is exemplary in nature and is not intended to limit the scope, applicability, or configuration of the invention in any way. Rather, the following description provides some practical illustrations for implementing examples of the present invention. Examples of constructions, materials, dimensions, and manufacturing processes are provided for selected elements, and all other elements employ that which is known to those of ordinary skill in the field of the invention. Those skilled in the art will recognize that many of the noted examples have a variety of suitable alternatives.

A thermal imaging camera may be used to detect heat patterns across a scene under observation. The thermal imaging camera may detect infrared radiation given off by the scene and convert the infrared radiation into an infrared image indicative of the heat patterns. In some examples, the thermal imaging camera may also capture visible light from the scene and convert the visible light into a visible light image. Depending on the configuration of the thermal imaging camera, the camera may include infrared optics to focus the infrared radiation on an infrared sensor and visible light optics to focus the visible light on a visible light sensor. Visible light images and infrared images of the scene may be taken simultaneously so that the location of the infrared image can be more easily identified.

In order to detect changes in the infrared radiation over time, embodiments of the invention enable a user to retake an infrared image in the same position as an earlier infrared image. In this way, the earlier infrared image may be compared to the present infrared image, so that changes in the infrared image, representing changes in heat patterns, may be more easily identified. Furthermore, in order to make the comparison as accurate as possible, embodiments of the invention may process an image to create a visual pose template to assist the user in relocating the camera to the appropriate position. For example, the image processing may include identifying, extracting and/or augmenting one or more features in a previously taken image to create the pose template. The user may then use the pose template to more quickly and accurately align the camera with the previous camera position.

The detection of changes in the infrared image are particularly useful in certain situations. For example, when an object typically produces heat, it may be difficult to determine whether or not the infrared image indicates a problem. However, a comparison between an earlier and a later image may reveal that the object is producing increased amounts of heat, and therefore that a problem may be present. For example, one could periodically capture infrared images from approximately the same vantage point of many different machines, including an industrial kiln or industrial furnace. Such kilns contain refractory material and such furnaces contain insulation. By monitoring the thermogram of such devices over time and considering the rate of change of the measured temperatures, a user can determine if or when the refractory material or the insulation is deteriorating and may need replacement. However, if the comparison reveals that heat production is stable, then the object may be operating normally. In order to make the comparison as useful as possible, the image is preferably retaken in the same position, with the same settings and under the same conditions. Embodiments of the invention facilitate the process of positioning the camera in the original position.

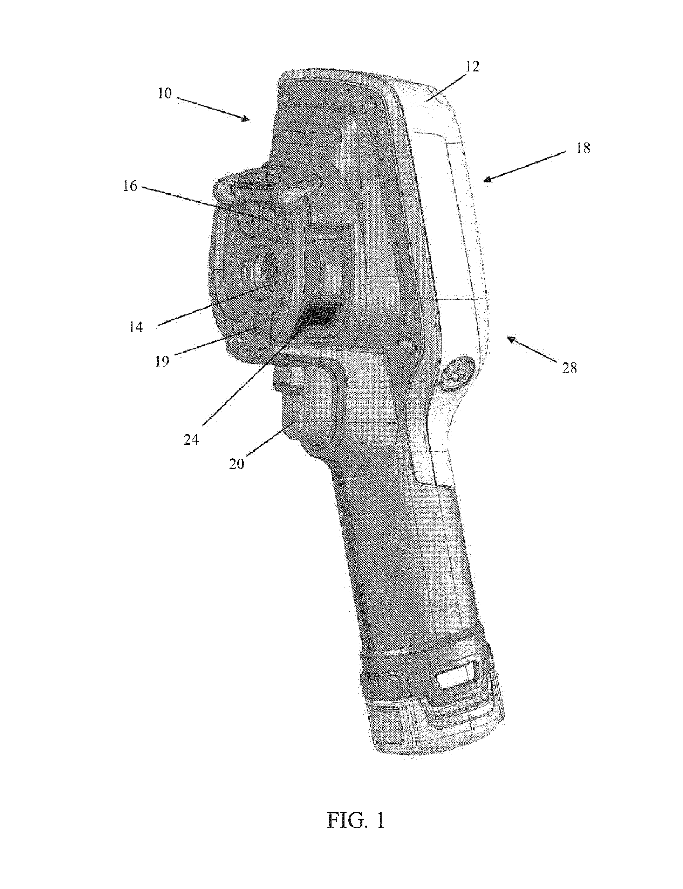

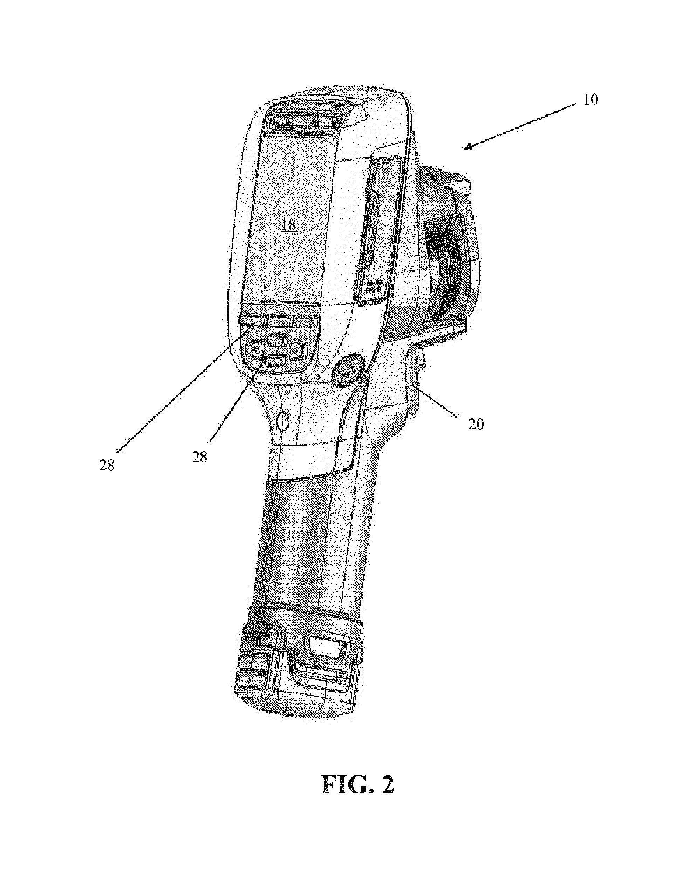

FIGS. 1 and 2 show front and back perspective views, respectively of a thermal imaging camera 10 that may be used in various embodiments. The camera 10 includes a housing 12, an infrared lens assembly 14, a visible light lens assembly 16, a display 18, a laser 19, and a trigger control 20. Housing 12 houses the various components of thermal imaging camera 10. Infrared lens assembly 14 receives infrared radiation from a scene and focuses the radiation on an infrared sensor for generating an infrared image of a scene. Visible light lens assembly 16 receives visible light from a scene and focuses the visible light on a visible light sensor for generating a visible light image of the same scene. Thermal imaging camera 10 captures the visible light image and/or the infrared image in response to depressing trigger control 20. In addition, thermal imaging camera 10 controls display 18 to display the infrared image and the visible light image generated by the camera, e.g., to help an operator thermally inspect a scene. Display 18 may further display visual indications directing a user to reposition the camera 10, when the camera 10 is being used to retake a thermal image from the same position as a thermal image that was obtained previously. Thermal imaging camera 10 may also include a focus mechanism coupled to infrared lens assembly 14 that is configured to move at least one lens of the infrared lens assembly so as to adjust the focus of an infrared image generated by the thermal imaging camera.

In operation, thermal imaging camera 10 detects heat patterns in a scene by receiving energy emitted in the infrared-wavelength spectrum from the scene and processing the infrared energy to generate a thermal image. Thermal imaging camera 10 may also generate a visible light image of the same scene by receiving energy in the visible light-wavelength spectrum and processing the visible light energy to generate a visible light image. As described in greater detail below, thermal imaging camera 10 may include an infrared camera module that is configured to capture an infrared image of the scene and a visible light camera module that is configured to capture a visible light image of the same scene. The infrared camera module may receive infrared radiation projected through infrared lens assembly 14 and generate therefrom infrared image data. The visible light camera module may receive light projected through visible light lens assembly 16 and generate therefrom visible light data.

In some examples, thermal imaging camera 10 collects or captures the infrared energy and visible light energy substantially simultaneously (e.g., at the same time) so that the visible light image and the infrared image generated by the camera are of the same scene at substantially the same time. In these examples, the infrared image generated by thermal imaging camera 10 is indicative of localized temperatures within the scene at a particular period of time while the visible light image generated by the camera is indicative of the same scene at the same period of time. In other examples, thermal imaging camera may capture infrared energy and visible light energy from a scene at different periods of time.

The scene which is captured by the thermal imaging camera 10 depends upon its position and settings. The position includes not only the location of the thermal imaging camera 10 within the 3 dimensions of space but also the rotation of the thermal imaging camera 10 within the 3 axis of rotation, with a total of 6 variables therefore determining the camera's position. The settings include zoom, lens type or use of a supplemental lens, focal distance, F-number, emissivity, reflected temperature settings, transmission settings of a window, for example. Both the position and the setting are preferably reproduced when an infrared image is retaken for purposes of determining the presence of change in the infrared image over time.

Visible light lens assembly 16 includes at least one lens that focuses visible light energy on a visible light sensor for generating a visible light image. Visible light lens assembly 16 defines a visible light optical axis 26 which passes through the center of curvature of the at least one lens of the assembly. Visible light energy projects through a front of the lens and focuses on an opposite side of the lens. Visible light lens assembly 16 can include a single lens or a plurality of lenses (e.g., two, three, or more lenses) arranged in series. In addition, visible light lens assembly 16 can have a fixed focus or can include a focus adjustment mechanism for changing the focus of the visible light optics. In examples in which visible light lens assembly 16 includes a focus adjustment mechanism, the focus adjustment mechanism may be a manual adjustment mechanism or an automatic adjustment mechanism.

Infrared lens assembly 14 also includes at least one lens that focuses infrared energy on an infrared sensor for generating a thermal image. Infrared lens assembly 14 defines an infrared optical axis 22 which passes through the center of curvature of the at least one lens of the assembly. During operation, infrared energy is directed through the front of the lens and focused on an opposite side of the lens. Infrared lens assembly 14 can include a single lens or a plurality of lenses (e.g., two, three, or more lenses), which may arranged in series.

As briefly described above, thermal imaging camera 10 includes a focus mechanism for adjusting the focus of an infrared image captured by the camera. In the example shown in FIGS. 1 and 2, thermal imaging camera 10 includes focus ring 24. Focus ring 24 is operatively coupled (e.g., mechanically and/or electrically coupled) to at least one lens of infrared lens assembly 14 and configured to move the at least one lens to various focus positions so as to focus the infrared image captured by thermal imaging camera 10. In different examples, thermal imaging camera 10 may include a manual focus adjustment mechanism that is implemented in a configuration other than focus ring 24, such as an actuatable switch. Alternatively, thermal imaging camera 10 may include an automatically adjusting focus mechanism in addition to or in lieu of a manually adjusting focus mechanism. In some applications of such an example, thermal imaging camera 10 may use laser 19 to electronically measure a distance between an object in a target scene and the camera.

During operation of thermal imaging camera 10, an operator may wish to view a thermal image of a scene and/or a visible light image of the same scene generated by the thermal imaging camera 10. For this reason, thermal imaging camera 10 may include a display. In the examples of FIGS. 1 and 2, thermal imaging camera 10 includes display 18, which is located on the back of housing 12 opposite infrared lens assembly 14 and visible light lens assembly 16. Display 18 may be configured to display a visible light image, an infrared image, and/or a blended image that is a simultaneously display of the visible light image and the infrared image. In different examples, display 18 may be remote (e.g., separate) from infrared lens assembly 14 and visible light lens assembly 16 of thermal imaging camera 10, or display 18 may be in a different spatial arrangement relative to infrared lens assembly 14 and/or visible light lens assembly 16. Therefore, although display 18 is shown behind infrared lens assembly 14 and visible light lens assembly 16 in FIG. 2, other locations for display 18 are possible.

Thermal imaging camera 10 can include a variety of user input media for controlling the operation of the camera and adjusting different settings of the camera. Example control functions may include adjusting the focus of the infrared and/or visible light optics, opening/closing a shutter, capturing an infrared and/or visible light image, or the like. In the example of FIGS. 1 and 2, thermal imaging camera 10 includes a depressible trigger control 20 for capturing an infrared and visible light image, and buttons 28 for controlling other aspects of the operation of the camera. A different number or arrangement of user input media are possible, and it should be appreciated that the disclosure is not limited in this respect. For example, thermal imaging camera 10 may include a touch screen display 18 which receives user input by depressing different portions of the screen.

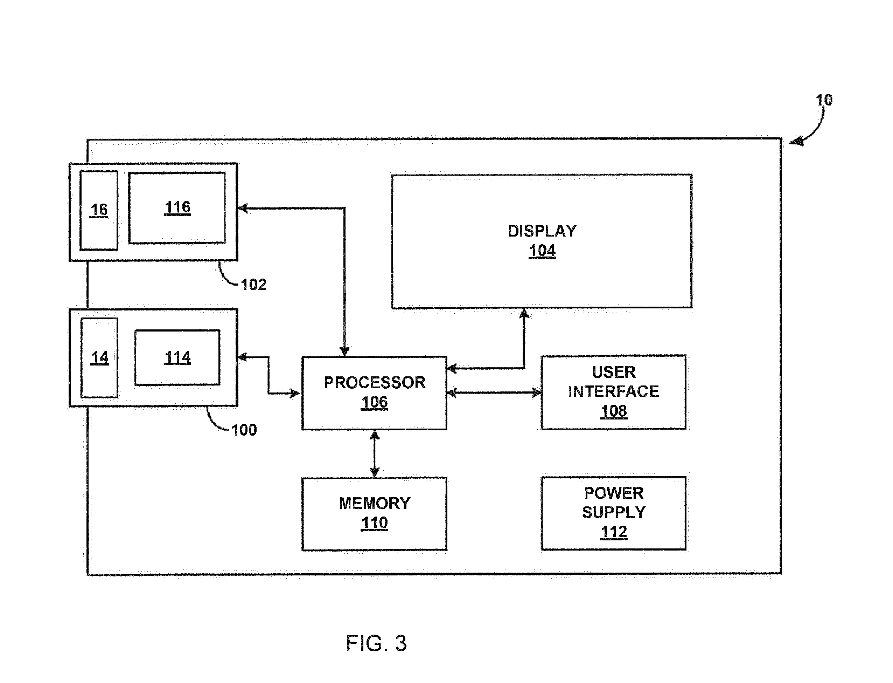

FIG. 3 is a functional block diagram illustrating components of an example of thermal imaging camera 10, which includes an infrared camera module 100, a visible light camera module 102, a display 104, a processor 106, a user interface 108, a memory 110, and a power supply 112. Processor is communicatively coupled to infrared camera module 100, visible light camera module 102, display 104, user interface 108, and memory 110. Power supply 112 delivers operating power to the various components of thermal imaging camera 10 and, in some examples, may include a rechargeable or non-rechargeable battery and a power generation circuit.

Infrared camera module 100 may be configured to receive infrared energy emitted by a target scene and to focus the infrared energy on an infrared sensor for generation of infrared energy data, e.g., that can be displayed in the form of an infrared image on display 104 and/or stored in memory 110. Infrared camera module 100 can include any suitable components for performing the functions attributed to the module herein. In the example of FIG. 3, infrared camera module is illustrated as including infrared lens assembly 14 and infrared sensor 114. As described above with respect to FIGS. 1 and 2, infrared lens assembly 14 includes at least one lens that takes infrared energy emitted by a target scene and focuses the infrared energy on infrared sensor 114. Infrared sensor 114 responds to the focused infrared energy by generating an electrical signal that can be converted and displayed as an infrared image on display 104.

Infrared lens assembly 14 can have a variety of different configurations. In some examples, infrared lens assembly 14 defines a F-number (which may also be referred to as a focal ratio or F-stop) of a specific magnitude. A F-number may be determined by dividing the focal length of a lens (e.g., an outermost lens of infrared lens assembly 14) by a diameter of an entrance to the lens, which may be indicative of the amount of infrared radiation entering the lens. In general, increasing the F-number of infrared lens assembly 14 may increase the depth-of-field, or distance between nearest and farthest objects in a target scene that are in acceptable focus, of the lens assembly. An increased depth of field may help achieve acceptable focus when viewing different objects in a target scene with the infrared optics of thermal imaging camera 10 set at a hyperfocal position. If the F-number of infrared lens assembly 14 is increased too much, however, the spatial resolution (e.g., clarity) may decrease such that a target scene is not in acceptable focus.

In various examples, infrared lens assembly 14 may define a F-number greater than 0.5 such as, e.g., greater than 1.0, greater than approximately 1.2, or greater than approximately 1.3. In other examples, infrared lens assembly 14 may define a F-number that ranges from approximately 0.85 to approximately 2 such as, e.g., from approximately 1 to approximately 1.8, approximately 1.2 to approximately 1.5, or approximately 1.3 to approximately 1.4. Infrared lens assembly 14 may define other acceptable F-numbers, and it should be appreciated that the disclosure is not limited in this respect.

Infrared sensor 114 may include one or more focal plane arrays (FPA) that generate electrical signals in response to infrared energy received through infrared lens assembly 14. Each FPA can include a plurality of infrared sensor elements including, e.g., bolometers, photon detectors, or other suitable infrared sensor elements. In operation, each sensor element, which may each be referred to as a sensor pixel, may change an electrical characteristic (e.g., voltage or resistance) in response to absorbing infrared energy received from a target scene. In turn, the change in electrical characteristic can provide an electrical signal that can be received by processor 106 and processed into an infrared image displayed on display 104.

For instance, in examples in which infrared sensor 114 includes a plurality of bolometers, each bolometer may absorb infrared energy focused through infrared lens assembly 14 and increase in temperature in response to the absorbed energy. The electrical resistance of each bolometer may change as the temperature of the bolometer changes. Processor 106 may measure the change in resistance of each bolometer by applying a current (or voltage) to each bolometer and measure the resulting voltage (or current) across the bolometer. Based on these data, processor 106 can determine the amount of infrared energy emitted by different portions of a target scene and control display 104 to display a thermal image of the target scene.

Independent of the specific type of infrared sensor elements included in the FPA of infrared sensor 114, the FPA array can define any suitable size and shape. In some examples, infrared sensor 114 includes a plurality of infrared sensor elements arranged in a grid pattern such as, e.g., an array of sensor elements arranged in vertical columns and horizontal rows. In various examples, infrared sensor 114 may include an array of vertical columns by horizontal rows of, e.g., 16 x 16, 50 x 50, 160 x 120, 120 x 160, or 640 x 480. In other examples, infrared sensor 114 may include a smaller number of vertical columns and horizontal rows (e.g., 1 x 1), a larger number vertical columns and horizontal rows (e.g., 1000 x 1000), or a different ratio of columns to rows.

During operation of thermal imaging camera 10, processor 106 can control infrared camera module 100 to generate infrared image data for creating an infrared image. Processor 106 can generate a "frame" of infrared image data by measuring an electrical signal from each infrared sensor element included in the FPA of infrared sensor 114. The magnitude of the electrical signal (e.g., voltage, current) from each infrared sensor element may correspond to the amount of infrared radiation received by each infrared sensor element, where sensor elements receiving different amounts of infrared radiation exhibit electrical signal with different magnitudes. By generating a frame of infrared image data, processor 106 captures an infrared image of a target scene at a given point in time.

Processor 106 can capture a single infrared image or "snap shot" of a target scene by measuring the electrical signal of each infrared sensor element included in the FPA of infrared sensor 114 a single time. Alternatively, processor 106 can capture a plurality of infrared images of a target scene by repeatedly measuring the electrical signal of each infrared sensor element included in the FPA of infrared sensor 114. In examples in which processor 106 repeatedly measures the electrical signal of each infrared sensor element included in the FPA of infrared sensor 114, processor 106 may generate a dynamic thermal image (e.g., a video representation) of a target scene. For example, processor 106 may measure the electrical signal of each infrared sensor element included in the FPA at a rate sufficient to generate a video representation of thermal image data such as, e.g., 30 Hz or 60 Hz. Processor 106 may perform other operations in capturing an infrared image such as sequentially actuating a shutter (not illustrated) to open and close an aperture of infrared lens assembly 14, or the like.

With each sensor element of infrared sensor 114 functioning as a sensor pixel, processor 106 can generate a two-dimensional image or picture representation of the infrared radiation from a target scene by translating changes in an electrical characteristic (e.g., resistance) of each sensor element into a time-multiplexed electrical signal that can be processed, e.g., for visualization on display 104 and/or storage in memory 110. Processor 106 may perform computations to convert raw infrared image data into scene temperatures including, in some examples, colors corresponding to the scene temperatures.

Processor 106 may control display 104 to display at least a portion of an infrared image of a captured target scene. In some examples, processor 106 controls display 104 so that the electrical response of each sensor element of infrared sensor 114 is associated with a single pixel on display 104. In other examples, processor 106 may increase or decrease the resolution of an infrared image so that there are more or fewer pixels displayed on display 104 than there are sensor elements in infrared sensor 114. Processor 106 may control display 104 to display an entire infrared image (e.g., all portions of a target scene captured by thermal imaging camera 10) or less than an entire infrared image (e.g., a lesser port of the entire target scene captured by thermal imaging camera 10). Processor 106 may perform other image processing functions, as described in greater detail below.

Although not illustrated on FIG. 3, thermal imaging camera 10 may include various signal processing or conditioning circuitry to convert output signals from infrared sensor 114 into a thermal image on display 104. Example circuitry may include a bias generator for measuring a bias voltage across each sensor element of infrared sensor 114, analog-to-digital converters, signal amplifiers, or the like. Independent of the specific circuitry, thermal imaging camera 10 may be configured to manipulate data representative of a target scene so as to provide an output that can be displayed, stored, transmitted, or otherwise utilized by a user.

Thermal imaging camera 10 includes visible light camera module 102. Visible light camera module 102 may be configured to receive visible light energy from a target scene and to focus the visible light energy on a visible light sensor for generation of visible light energy data, e.g., that can be displayed in the form of a visible light image on display 104 and/or stored in memory 110. Visible light camera module 102 can include any suitable components for performing the functions attributed to the module herein. In the example of FIG. 3, visible light camera module 102 is illustrated as including visible light lens assembly 16 and visible light sensor 116. As described above with respect to FIGS. 1 and 2, visible light lens assembly 16 includes at least one lens that takes visible light energy emitted by a target scene and focuses the visible light energy on visible light sensor 116. Visible light sensor 116 responds to the focused energy by generating an electrical signal that can be converted and displayed as a visible light image on display 104.

Visible light sensor 116 may include a plurality of visible light sensor elements such as, e.g., CMOS detectors, CCD detectors, PIN diodes, avalanche photo diodes, or the like. The number of visible light sensor elements may be the same as or different than the number of infrared light sensor elements.

In operation, optical energy received from a target scene may pass through visible light lens assembly 16 and be focused on visible light sensor 116. When the optical energy impinges upon the visible light sensor elements of visible light sensor 116, photons within the photodetectors may be released and converted into a detection current. Processor 106 can process this detection current to form a visible light image of the target scene.

During use of thermal imaging camera 10, processor 106 can control visible light camera module 102 to generate visible light data from a captured target scene for creating a visible light image. The visible light data may include luminosity data indicative of the color(s) associated with different portions of the captured target scene and/or the magnitude of light associated with different portions of the captured target scene. Processor 106 can generate a "frame" of visible light image data by measuring the response of each visible light sensor element of thermal imaging camera 10 a single time. By generating a frame of visible light data, processor 106 captures visible light image of a target scene at a given point in time. Processor 106 may also repeatedly measure the response of each visible light sensor element of thermal imaging camera 10 so as to generate a dynamic thermal image (e.g., a video representation) of a target scene, as described above with respect to infrared camera module 100.

With each sensor element of visible light camera module 102 functioning as a sensor pixel, processor 106 can generate a two-dimensional image or picture representation of the visible light from a target scene by translating an electrical response of each sensor element into a time-multiplexed electrical signal that can be processed, e.g., for visualization on display 104 and/or storage in memory 110.

Processor 106 may control display 104 to display at least a portion of a visible light image of a captured target scene. In some examples, processor 106 controls display 104 so that the electrical response of each sensor element of visible light camera module 102 is associated with a single pixel on display 104. In other examples, processor 106 may increase or decrease the resolution of a visible light image so that there are more or fewer pixels displayed on display 104 than there are sensor elements in visible light camera module 102. Processor 106 may control display 104 to display an entire visible light image (e.g., all portions of a target scene captured by thermal imaging camera 10) or less than an entire visible light image (e.g., a lesser port of the entire target scene captured by thermal imaging camera 10).

As noted above, processor 106 may be configured to determine a distance between thermal imaging camera 10 and an object in a target scene captured by a visible light image and/or infrared image generated by the camera. Processor 106 may determine the distance based on a focus position of the infrared optics associated with the camera. For example, processor 106 may detect a position (e.g., a physical position) of a focus mechanism associated with the infrared optics of the camera (e.g., a focus position associated with the infrared optics) and determine a distance-to-target value associated with the position. Processor 106 may then reference data stored in memory 110 that associates different positions with different distance-to-target values to determine a specific distance between thermal imaging camera 10 and the object in the target scene.

In these and other examples, processor 106 may control display 104 to concurrently display at least a portion of the visible light image captured by thermal imaging camera 10 and at least a portion of the infrared image captured by thermal imaging camera 10. Such a concurrent display may be useful in that an operator may reference the features displayed in the visible light image to help understand the features concurrently displayed in the infrared image, as the operator may more easily recognize and distinguish different real-world features in the visible light image than the infrared image. In various examples, processor 106 may control display 104 to display the visible light image and the infrared image in side-by-side arrangement, in a picture-in-picture arrangement, where one of the images surrounds the other of the images, or any other suitable arrangement where the visible light and the infrared image are concurrently displayed.

For example, processor 106 may control display 104 to display the visible light image and the infrared image in a fused arrangement. In a fused arrangement, the visible light image and the infrared image may be superimposed on top of one another. An operator may interact with user interface 108 to control the transparency or opaqueness of one or both of the images displayed on display 104. For example, the operator may interact with user interface 108 to adjust the infrared image between being completely transparent and completely opaque and also adjust the visible light image between being completely transparent and completely opaque. Such an example fused arrangement, which may be referred to as an alpha-blended arrangement, may allow an operator to adjust display 104 to display an infrared-only image, a visible light-only image, of any overlapping combination of the two images between the extremes of an infrared-only image and a visible light-only image.

Components described as processors within thermal imaging camera 10, including processor 106, may be implemented as one or more processors, such as one or more microprocessors, digital signal processors (DSPs), application specific integrated circuits (ASICs), field programmable gate arrays (FPGAs), programmable logic circuitry, or the like, either alone or in any suitable combination.

In general, memory 110 stores program instructions and related data that, when executed by processor 106, cause thermal imaging camera 10 and processor 106 to perform the functions attributed to them in this disclosure. Memory 110 may include any fixed or removable magnetic, optical, or electrical media, such as RAM, ROM, CD-ROM, hard or floppy magnetic disks, EEPROM, or the like. Memory 110 may also include a removable memory portion that may be used to provide memory updates or increases in memory capacities. A removable memory may also allow image data to be easily transferred to another computing device, or to be removed before thermal imaging camera 10 is used in another application.

An operator may interact with thermal imaging camera 10 via user interface 108, which may include buttons, keys, or another mechanism for receiving input from a user. The operator may receive output from thermal imaging camera 10 via display 104. Display 104 may be configured to display an infrared-image and/or a visible light image in any acceptable palette, or color scheme, and the palette may vary, e.g., in response to user control. In some examples, display 104 is configured to display an infrared image in a monochromatic palette such as grayscale or amber. In other examples, display 104 is configured to display an infrared image in a color palette such as, e.g., ironbow, blue-red, or other high contrast color scheme. Combination of grayscale and color palette displays are also contemplated.

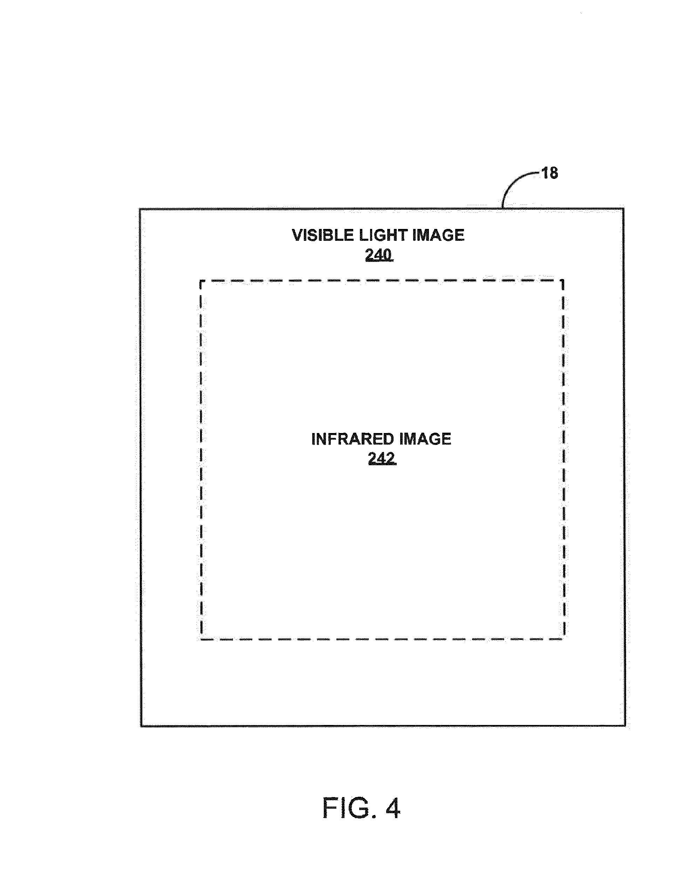

While processor 106 can control display 104 to concurrently display at least a portion of an infrared image and at least a portion of a visible light image in any suitable arrangement, a picture-in-picture arrangement may help an operator to easily focus and/or interpret a thermal image by displaying a corresponding visible image of the same scene in adjacent alignment. FIG. 4 is a conceptual illustration of one example picture-in-picture type display of a visual image 240 and an infrared image 242. In the example of FIG. 4, visual image 240 surrounds infrared image 242, although in other examples infrared image 242 may surround visual image 240, or visual image 240 and infrared image 242 may have different relative sizes or shapes than illustrated and it should be appreciated that the disclosure is not limited in this respect.

During operation of thermal imaging camera 10, processor 106 controls infrared camera module 100 and visible light camera module 102 with the aid of instructions associated with program information that is stored in memory 110 to generate a visible light image and an infrared image of a target scene. Processor 106 further controls display 104 to display the visible light image and/or the infrared image generated by thermal imaging camera 10. Memory 110 can further store infrared, visible light, and fused infrared and visible light images along with data regarding the camera settings used to obtain the images. The program information can further control the operations necessary for retaking the infrared image in the same position as an earlier infrared image. For example, the processor can include programming for forming a pose template which can be used when retaking an image. Alternatively, such programming may be stored separately in a computer, such as a personal computer, or may be stored elsewhere (such as in the "cloud") and where it can be accessed by a user through the internet, for example, through a personal computer or through the thermal imaging camera 10.

The programming for processing the image to create the pose template may identify features in the image, extract the features, and augment the features. For example, features which may be identified include distinct objects, intersecting lines, geometric shapes, and other distinctive features. These may be identified using line or edge detection programming or automatic object recognition programming (which may recognize certain mechanical equipment, such as motor profiles), for example. Alternatively, the user may identify features within the image by visual inspection and may select certain features to augment. For instance, a user could use simple drawing tools (such as lines, rectangles, or other shapes) on a PC or available on the camera, via buttons 28, to manually outline objects found in the image, augment lines that form different shapes in the image, or highlight the edges in the image, for example.

The resulting augmented images of certain image features may be used to form all or part of the pose template. Such augmented features may appear as line drawings which define the features, such as by augmenting the edges of the features. The pose template may augment one, two, three or more features of the image, for example. For example, the pose template may augment a feature by outlining it on one or more sides. In some embodiments, the pose template may outline a feature on all sides to form a frame around the object. In other embodiments, the pose template may augment edges which form straight lines or intersecting straight lines. The augmentation may be in the form of a line of a contrasting color, a dark line, a thick line or a highlight which may be solid or at least partially transparent, for example.

In some embodiments, the processor 106 includes programming information for creating a negative infrared image used to produce a difference image. In such embodiments, the programming subtracts the infrared energy depicted in an first infrared or fused image from the live image of the same type, or vice versa. If the thermal energy of the live scene is unchanged from the first image, the negative image should disappear when the thermal imaging camera is aligned with the original position. That is, the live thermal image and the first image applied as a negative thermal image should cancel each other out in the difference image if the thermal energy of the live scene is unchanged and the camera is aligned with the original position. The difference image is produced by subtracting, on a pixel-by-pixel basis, the first infrared image (or a portion thereof) from the second infrared image (or a corresponding portion thereof) on a pixel-by-pixel basis. However, when the position of the thermal imaging camera 10 is not the same as the original position, the edges of certain features will likely be apparent on the resultant difference image, indicating the need for further repositioning.

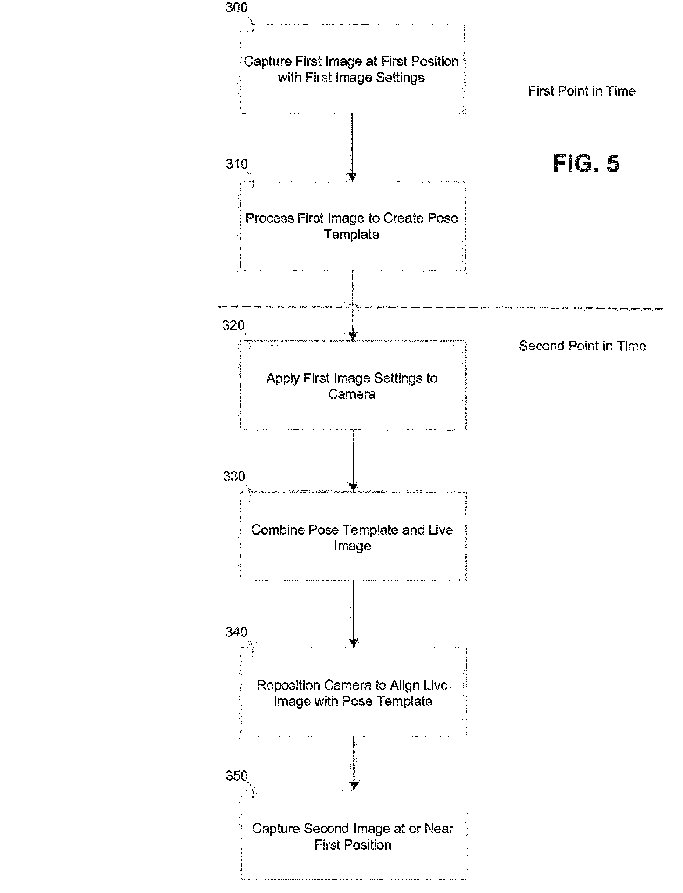

Figure 5 presents a flow chart of a process of retaking an infrared image according to some embodiments of the invention. In step 300, a first image is captured by a thermal imaging camera at a first position. The first image may be a visible light image, a thermal energy image, or a fused infrared and visible light image.

In some embodiments, the first image is a visible light image taken in the same position and at the same time as an infrared or fused image. The visible light image is used for creating the pose template while the associated infrared or fused image is used for comparison to a later infrared or fused image.

The first image may be stored in the memory 110 of the thermal imaging camera 10 until selected for processing at a later time. Alternatively, the first image may be transferred to a computer for processing. In other alternatives, the first image may be transferred to and stored on a storage medium. It may later be transferred to a thermal imaging camera 10 which may be the original thermal imaging camera or may be a second thermal imaging camera 10 for processing. The stored first image may also include data regarding the camera settings used to take the first image, such as the focal distance, F-stop, zoom, lens type which may be stored with the image.

Next, the first image is processed by the thermal imaging camera 10 or a separate computer to create a pose template at step 310. As described above, the image processing identifies and augments features of the first image to create the pose template.

At step 320, one or more or all of the image settings used when taking the first image are applied to the live image. As noted below, the settings may be applied automatically or manually by the user. The second image may be an infrared image or a fused infrared and visible light image and may be taken simultaneously or at nearly the same time as a visible light image.

At step 330, the pose template is combined with the live image. The combined live image and pose template may be seen by the user in the display 104 of the thermal imaging camera 10 at the direction of the user. In some embodiments, the live image is superimposed or overlaid on the first image. In other embodiments, the layering order is reversed. The pose template is shown as a static image on the display 104, such as a set of line or shapes, which do not move as the thermal imaging camera 10 is repositioned. In contrast, the live image on the display 104 moves as the thermal imaging camera 10 is repositioned.

In the flow chart, step 320 precedes step 330. However, step 330 may alternatively precede step 320. In some embodiments, steps 320 and 330 may occur simultaneously, such that when the user directs the camera to apply the pose template to a live image, this direction may also signal the camera to automatically apply the first camera settings to the live image.

In some embodiments, the first camera settings are applied automatically by the thermal imaging camera in step 330. In other embodiments, the user manually applies the first camera settings to the thermal imaging camera in step 330. The thermal imaging camera may inform the user of the first camera settings (such as by indicating them on the display) to prompt the user to apply them. In still other embodiments, one or more settings are applied automatically and one or more are applied manually.

Next, the user repositions the camera to align the live image with the pose template in step 340. As noted above, the pose template forms a static image on the display 104 and the live image on the display 104 moves as the thermal imaging camera 10 is repositioned. The user therefore can reposition the thermal imaging camera 10 until the features of the live image which were augmented to create the pose template come into alignment with the pose template on the display 104. Once the live image is aligned with the pose template or approximately aligned with the pose template, the thermal imaging camera is in the first position, or is sufficiently close to the first position to retake the image.

Once the second position of the thermal imaging camera is the same as, or sufficiently close to, the first position, a second image is captured at step 350. The second image may be an infrared image or a fused infrared and visible light image and may be taken simultaneously or at nearly the same time as a visible light image. When the user determines that the camera is at, or sufficiently close to, the first position based upon the alignment of the pose template and the live image, the user may activate the thermal imaging camera 10 to capture the second image, for instance by depressing trigger 20. Alternatively, when the thermal imaging camera 10 determines that it is at, or sufficiently close to, the first position, based on the alignment of the pose template and the live image, the thermal imaging camera 10 may automatically capture the second image or may signal the user to capture the image, such as by a visible cue on the display 104.

In some embodiments, the second image is the same type of image as the first image. For example, the first and second images may both be infrared images or fused images. The live image in steps 320 and 330 may also be the same type of image. In other embodiments, the first image and the second image may be different types of images. For example, the first image may be a visible light image (which may be associated with an infrared or fused image) and the second image may be an infrared or fused image. The live image in steps 320 and 330 may be of the same type as the first image, the second image, or neither. In some embodiments, both the first image and the live image are visible light images and the second image is an infrared or fused image.

Alternatively, the process for retaking a thermal image may utilize the negative thermal image described above. In such embodiments, a first thermal image is captured at a first position with first settings. The first image may be an infrared image or a fused image. A live image is then obtained at a later time, which is the same type of image as the first image and may be taken with the same thermal energy camera 10 as the first image or with a different thermal energy camera. One or more or all of the first settings are applied to the live image as described above. The first image and live image are then processed to create a negative thermal image which is shown on the display 104. The user then observes the thermal image and repositions the thermal imaging camera 10. The thermal imaging camera continues to process the first image and live image as the thermal imaging camera 10 is repositioned, creating a live difference image. When the thermal imaging camera is a or is sufficiently close to the first position, a second image is captured, which may be an infrared or fused image and may or may not be the same type of image as the first image.

The determination of whether a camera position is sufficiently close to the position at which an original image was taken can be made using the programming information. For example, a particular amount of tolerance for variation from the original position may be preset into the thermal imaging camera 10. Alternatively, this determination can be made by the user, based on the user's observation of the scene and the closeness of the alignment of the live image with the pose template. Furthermore, in some embodiments, when an image is captured at a position that is sufficiently close (within the allowed tolerance) the programming information may shift (recenter) the captured image to align more exactly with the original image. This shift may occur automatically or at the direction of the user.

By having first and second infrared images, taken at different points in time but from generally the same position, a comparison may be made to determine how the infrared images have changed. In this way, the first infrared image or fused infrared and visible light image may be compared to the second infrared image or fused infrared and visible light image, so that changes in the infrared aspect of the image, representing changes in heat patterns, may be more easily identified. The comparison may be made from a side-by-side manual comparison. The images could also be superimposed to more easily identify thermal shifts. Or, the processor 106 or other non-camera software could be employed to perform a thermal analysis of the two infrared images to identify thermal differences. A thermal shift may indicate a potential malfunction that can be remedied before it becomes a larger problem.

Example thermal image cameras and related techniques have been described. The techniques described in this disclosure may also be embodied or encoded in a computer-readable medium, such as a non-transitory computer-readable storage medium containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), a hard disk, optical media, or other computer readable media.

Various examples have been described. These and other examples are within the scope of the following claims.

Embodiments of the invention can be described with reference to the following numbered clauses, with preferred features laid out in the dependent clauses:

1. A portable, hand-held thermal imaging camera comprising:
an infrared (IR) lens assembly having an associated IR sensor for detecting thermal images of a target scene;
a visible light (VL) lens assembly having an associated VL sensor for detecting VL images of the target scene;
a display adapted to display at least a portion of the VL image or at least a portion of the IR image;
a memory adapted for storing a first VL image of a target scene captured concurrently with a first IR image of the target scene at a first position, the memory adapted for storing a second IR image of the target scene; and
a processor programmed with instructions to capture the first VL image concurrent with the capture of the first IR image at the first position and at a first point in time,
the processor programmed with instructions for processing the first IR image and/or the first VL image to create a pose template, the pose template including augmented features of the first image that provide indications of the first position; the processor programmed with instructions to combine the pose template with a live image of the scene on the display of the pose template and the live image to assist a user in repositioning the camera to the first position in order to capture a second IR image of the target scene at or near the first position.

2. The camera of clause 1, wherein the first image is an infrared only image or a fused infrared and visible light image.

3. The camera of clause 1, wherein the pose template has a fixed position on the display and the live image moves as the camera is repositioned.

4. The camera of cause 1, wherein the processor is programmed with instructions to identify and augment one or more features of the scene to create the pose template.

5. The camera of clause 4, wherein augments comprises emphasizing one or more edges of the feature.

6. The camera of clause 1, wherein the memory is further adapted for storing one or more camera settings which were applied when the first image was captured.

7. The camera of clause 6, wherein the processor is programmed with instructions to automatically apply one or more of the one or more camera settings to the camera while displaying the live image of the scene.

8. The camera of cause 1, wherein the processor is programmed with instructions to capture the second VL image at a second position and at a second point in time, the second point in time being after the first point in time.

9. A portable, hand-held thermal imaging camera comprising:
an infrared (IR) lens assembly having an associated IR sensor for detecting thermal images of a target scene;
a visible (VL) lens assembly having an associated VL sensor for detecting VL images of the target scene;
a display adapted to display at least a portion of the VL image or at least a portion of the IR image;
a memory adapted for storing a first VL image of a target scene and a first IR image of the target scene each captured at a first position, the memory adapted for storing a second IR image of the target scene; and
the processor programmed with instructions for subtracting the first IR image from a live IR image of the scene to create a difference image to assist a user in aligning the camera with the first position in order to capture a second IR image of the target scene at or near the first position.

10. The camera of clause 9, wherein the first and second IR images comprise IR only images or fused IR and VL images.

11. The camera of clause 10, wherein the memory is further adapted for storing one or more camera settings which were applied when the first image was captured.

12. The camera of clause 11, wherein the processor is programmed with instructions to automatically apply the one or more camera settings to the live image of the scene.

13. The camera of clause 9, wherein the processor is programmed with instructions for displaying the first VL image along with the difference image to assist the user in aligning the camera in the first position.

14. A method of retaking an infrared (IR) image of a scene comprising:
selecting a first image of the scene captured with a first thermal imaging camera in a first position;
processing the first image to identify and augment features of the first image to create a pose template;
combining the pose template with a live image of the scene on a display of the second thermal imaging camera pointed at the scene;
repositioning the second thermal imaging camera until features of the live image align with the pose template indicating that the second thermal imaging camera is positioned at or near the first position, wherein the features of the live image align with the augmented features of the first image;
capturing a second image of the scene when the second thermal imaging camera is at or near the first position;
wherein the first and second thermal imaging cameras are the same camera or are different cameras.

15. The method of clause 14, wherein the second image is an IR only image or a fused IR and VL image.

16. The method of clause 14, wherein the pose template has a fixed position on the display and the live image moves as the camera is repositioned.

17. The method of clause 14 wherein augment comprises emphasizing one or more edges of the feature.

18. The method of clause 14, wherein the camera automatically applies to the live image one or more settings which were used when the first image was captured.

19. A method of retaking an infrared (IR) image of a scene comprising:
selecting a first IR image of the scene captured with a first thermal imaging camera;
obtaining a live IR image of the scene;
directing a second thermal imaging camera to process the first IR image and the live IR image to display a difference IR image;
repositioning the camera until the camera is at or near the first position using the difference image;
wherein the first and second thermal imaging camera are the same camera or are different cameras.

20. The method of clause 19, wherein processing the first IR image and the live IR image to display a difference IR image comprises subtracting the first IR image from the live IR image.

21. The method of clause 20, wherein the first and second IR images comprise IR only images or fused IR and VL images.

22. The method of clause 19, further comprising applying one or more settings to the live IR image wherein the one or more settings are the same as setting which were used when the first IR image was captured.

23. The method of clause 19, wherein the camera automatically applies one or more settings to the live image of the scene wherein the settings are the same as settings which were used when the first IR image was captured.

## Claims

1. A portable, hand-held thermal imaging camera comprising:
an infrared (IR) lens assembly having an associated IR sensor for detecting thermal images of a target scene;
a visible light (VL) lens assembly having an associated VL sensor for detecting VL images of the target scene;
a display adapted to display at least a portion of the VL image or at least a portion of the IR image;
a memory adapted for storing a first VL image of a target scene captured concurrently with a first IR image of the target scene at a first position, the memory adapted for storing a second IR image of the target scene; and
a processor programmed with instructions to capture the first VL image concurrent with the capture of the first IR image at the first position and at a first point in time,
the processor programmed with instructions for processing the first IR image and/or the first VL image to create a pose template, the pose template including augmented features of the first image that provide indications of the first position; the processor programmed with instructions to combine the pose template with a live image of the scene on the display of the pose template and the live image to assist a user in repositioning the camera to the first position in order to capture a second IR image of the target scene at or near the first position.

2. The camera of claim 1, wherein the pose template has a fixed position on the display and the live image moves as the camera is repositioned.

3. The camera of any one of the preceding claims, wherein the processor is programmed with instructions to identify and augment one or more features of the scene to create the pose template, and
wherein the augments preferably comprise emphasizing one or more edges of the feature.

4. The camera of any one of the preceding claims, wherein the processor is programmed with instructions to capture the second VL image at a second position and at a second point in time, the second point in time being after the first point in time.

5. A portable, hand-held thermal imaging camera comprising:
an infrared (IR) lens assembly having an associated IR sensor for detecting thermal images of a target scene;
a visible (VL) lens assembly having an associated VL sensor for detecting VL images of the target scene;
a display adapted to display at least a portion of the VL image or at least a portion of the IR image;
a memory adapted for storing a first VL image of a target scene and a first IR image of the target scene each captured at a first position, the memory adapted for storing a second IR image of the target scene; and
the processor programmed with instructions for subtracting the first IR image from a live IR image of the scene to create a difference image to assist a user in aligning the camera with the first position in order to capture a second IR image of the target scene at or near the first position.

6. The camera of claim 5, wherein the processor is programmed with instructions for displaying the first VL image along with the difference image to assist the user in aligning the camera in the first position.

7. The camera of any one of the preceding claims, wherein the first and second IR images comprise IR only images or fused IR and VL images.

8. The camera of any one of the preceding claims, wherein the memory is further adapted for storing one or more camera settings which were applied when the first image was captured, and
wherein the processor is preferably programmed with instructions to automatically apply the one or more camera settings to the live image of the scene.

9. A method of retaking an infrared (IR) image of a scene comprising:
selecting a first image of the scene captured with a first thermal imaging camera in a first position;
processing the first image to identify and augment features of the first image to create a pose template;
combining the pose template with a live image of the scene on a display of the second thermal imaging camera pointed at the scene;
repositioning the second thermal imaging camera until features of the live image align with the pose template indicating that the second thermal imaging camera is positioned at or near the first position, wherein the features of the live image align with the augmented features of the first image;
capturing a second image of the scene when the second thermal imaging camera is at or near the first position;
wherein the first and second thermal imaging cameras are the same camera or are different cameras.

10. The method of claim 9, wherein the pose template has a fixed position on the display and the live image moves as the camera is repositioned.

11. The method of claim 9 or claim 10, wherein augment comprises emphasizing one or more edges of the feature.

12. The method of any one of claims 9 to 11, wherein the camera automatically applies to the live image one or more settings which were used when the first image was captured.

13. A method of retaking an infrared (IR) image of a scene comprising:
selecting a first IR image of the scene captured with a first thermal imaging camera;
obtaining a live IR image of the scene;
directing a second thermal imaging camera to process the first IR image and the live IR image to
display a difference IR image;
repositioning the camera until the camera is at or near the first position using the difference image;
wherein the first and second thermal imaging camera are the same camera or are different cameras.

14. The method of claim 13, wherein processing the first IR image and the live IR image to display a difference IR image comprises subtracting the first IR image from the live IR image.

15. The method of claim 13 or claim 14, further comprising one of:
applying one or more settings to the live IR image wherein the one or more settings are the same as setting which were used when the first IR image was captured; and, automatically applying one or more settings to the live image of the scene wherein the settings are the same as settings which were used when the first IR image was captured.

16. The method of any one of claims 9 to 15, wherein the first and second IR images comprise IR only images or fused IR and VL images.
